# FASCICULE DE BREVET EUROPEEN

(11) **EP 4 331 996 B1**
(45) Date de publication et mention de la délivrance du brevet: **11.06.2025**
(21) Numéro de dépôt: 23193698.0
(22) Date de dépôt: 28.08.2023
(51) Int. Cl.: B64D 29/00, B64D 33/10, F02C 7/141, F02C 7/18, F02K 3/115, F02C 7/14, F28D 9/00, F28D 21/00, B64D 33/02

(54) **NACELLE D'UN MOTEUR D'AÉRONEF COMPORTANT UN ÉCHANGEUR DE CHALEUR AMÉLIORÉ**
TRIEBWERKSGONDEL FÜR FLUGZEUGE MIT VERBESSERTEM WÄRMEAUSTAUSCHER
AIRCRAFT ENGINE NACELLE INCLUDING AN IMPROVED HEAT EXCHANGER

(30) Priorité: 30.08.2022 FR 2208663
(43) Date de publication de la demande: 06.03.2024
(73) Titulaire: AIRBUS OPERATIONS, 31060 Toulouse Cedex 9 (FR)
(72) Inventeur: FLEMIN, Christian, 31060 TOULOUSE (FR)
(74) Mandataire: Cabinet Le Guen Maillet

(56) Documents cités:
- EP-A1- 3 719 277
- US-A1- 2021 231 057
- US-B2- 10 487 690
- US-B2- 10 654 579

## Description

### DOMAINE TECHNIQUE

La présente invention concerne une nacelle d'un moteur d'aéronef comportant un échangeur de chaleur particulier permettant le transport, la répartition et l'échange de chaleur, ainsi qu'un aéronef comportant un moteur équipé d'une telle nacelle.

### ÉTAT DE LA TECHNIQUE ANTÉRIEURE

Un aéronef comporte classiquement des moteurs comme par exemple des turboréacteurs. Chaque moteur comporte un noyau qui est alimenté en carburant pour faire fonctionner le moteur et assurer le déplacement de l'aéronef.

Le moteur comporte également une nacelle qui entoure le noyau et qui assure le guidage de l'air à l'intérieur du moteur et constitue une surface aérodynamique du moteur.

La nacelle comporte à l'intérieur une structure intérieure fixe (« inner fixed structure (IFS) » en langue anglosaxonne) qui est autour du noyau et délimite avec lui un canal pour l'air, et à l'extérieur de la structure intérieure fixe, une structure extérieure fixe (« outer fixed structure (OFS) » en langue anglosaxonne) qui forme la surface aérodynamique.

Dans la nacelle, en particulier dans la structure intérieure fixe, sont disposés des échangeurs de chaleur reliés par un système à fluide monophasique ou diphasique de transport de chaleur. De manière générale, un système à fluide monophasique est moins performant qu'un système à fluide diphasique, et moins intéressant qu'un système à fluide diphasique du point de vue masse, complexité, coût et capacité de transport. Le système à fluide diphasique de répartition et de transport de chaleur est réalisé soit à l'aide de caloducs fonctionnant par définition avec un pompage capillaire, ou soit à l'aide de boucles fluides à pompage capillaire ou mécanique. Dans le cas d'une boucle fluide diphasique, un système diphasique de transport de chaleur comporte un tube qui forme une boucle et à l'intérieur duquel circule un fluide caloporteur diphasique dont une partie passe en phase vapeur dans une zone chaude (appelée évaporateur) en récupérant la chaleur de la structure intérieure fixe grâce à la chaleur latente de vaporisation, transporte cette chaleur puis la libère en passant en phase liquide dans une zone froide (appelée condenseur) grâce à la chaleur latente de condensation. Le fluide caloporteur diphasique est entraîné soit par un pompage capillaire, ou soit par une pompe mécanique fluidiquement connectée au tube et le fluide circule ainsi dans la boucle en revenant à la pompe. La boucle s'étend de l'avant à l'arrière de la structure intérieure fixe, c'est-à-dire entre la partie la plus chaude du moteur où le fluide se chauffe en captant les calories dans la zone évaporateur de la boucle au niveau des zones chaudes du noyau à la partie la plus froide du moteur où le fluide se refroidit en cédant les calories vers l'air extérieur via la structure intérieure fixe froide de la nacelle dans la zone condenseur de la boucle. La boucle fluide diphasique à pompage mécanique peut aussi être remplacée par une boucle fluide diphasique à pompage capillaire ou par un tube à pompage capillaire rempli d'un fluide caloporteur diphasique appelé caloduc : un tel caloduc permet de transporter et de distribuer de la chaleur entre sa zone d'évaporation et sa zone de condensation. Le fonctionnement de la boucle fluide diphasique à pompage capillaire peut être assisté en couplant la boucle fluide diphasique avec une pompe centrifuge de faible puissance, mais cette hybridation est complexe car la pompe doit être contrôlée afin que l'évaporateur reste dans sa gamme de fonctionnement et s'adapte au flux de chaleur à collecter. Dans le cas de la boucle fluide à pompage capillaire, le mouvement de la phase liquide du fluide caloporteur est assuré par une structure capillaire en son cœur (appelée mèche poreuse) située dans l'évaporateur comportant aussi un réservoir permettant d'assurer le débit de fluide quelle que soit la quantité de liquide dépendant de sa température. Dans le cas du caloduc, le mouvement de la phase liquide du fluide caloporteur est assuré par une structure capillaire interne au caloduc.

Au cours de son parcours dans la boucle diphasique ou dans le caloduc et en fonction de ses caractéristiques, le fluide caloporteur peut changer de phase en fonction de la température.

Lorsque l'aéronef vole, en fonction des phases de vol, l'aéronef peut tourner en se penchant sur le côté, relever le nez ou l'abaisser. Dans ces cas, la phase liquide du fluide caloporteur diphasique qui est plus lourd que la phase gazeuse du fluide caloporteur va se déplacer à l'intérieur du tube en fonction de la pesanteur et de l'accélération apparente qu'elle subit. Dans certains cas, ce déplacement va à l'encontre du mouvement qu'elle doit effectuer dans la boucle ou dans le caloduc, et de plus, la phase liquide du fluide caloporteur n'est pas répartie sur toute la surface interne du tube, car une flaque se crée, ce qui peut réduire notablement l'efficacité des échanges thermiques en zone évaporateur et condenseur, et donc réduire l'efficacité du refroidissement de la structure intérieure fixe de la nacelle dans les zones chaudes.

US 10 654 579 B2 divulgue une nacelle pour un moteur d'aéronef, la nacelle comportant une structure intérieure fixe, un échangeur de chaleur dans lequel circule un fluide caloporteur diphasique et solidaire dudit capot intérieur, où l'échangeur de chaleur comporte un tube qui forme une boucle avec un brin avant, un brin arrière, un brin inférieur et un brin supérieur, et où l'échangeur de chaleur comporte une zone évaporateur implantée au niveau du brin arrière.

### EXPOSÉ DE L'INVENTION

Un objet de la présente invention est de proposer une nacelle comportant un échangeur de chaleur assurant le transport, la répartition et l'échange de chaleur, dans lequel le fluide caloporteur s'écoule de manière satisfaisante même lorsque l'avion subit des changements d'attitudes et des accélérations apparentes.

À cet effet, est proposée une nacelle pour un moteur d'aéronef, la nacelle comportant une structure intérieure fixe qui présente deux capots intérieurs et pour chaque capot intérieur, un échangeur de chaleur dans lequel circule un fluide caloporteur diphasique et solidaire dudit capot intérieur, où l'échangeur de chaleur comporte :
- un tube qui forme une boucle avec un brin avant, un brin arrière, un brin inférieur et un brin supérieur, et
- une zone évaporateur implantée au niveau du brin arrière, la nacelle étant telle que l'échangeur de chaleur comporte :
- un premier brin complémentaire qui relie fluidiquement une zone centrale du brin avant à une zone centrale du brin supérieur,
- un deuxième brin complémentaire qui relie fluidiquement une zone centrale du brin avant à une zone centrale du brin inférieur,
- un troisième brin complémentaire qui relie fluidiquement une zone centrale du brin arrière à une zone centrale du brin supérieur, et
- un quatrième brin complémentaire qui relie fluidiquement une zone centrale du brin arrière à une zone centrale du brin inférieur.

Avec une telle implémentation des brins, même lorsque l'aéronef subit des changements de position et d'accélération, le fluide caloporteur va s'écouler de l'avant vers l'arrière puis de l'arrière vers l'avant à travers au moins un des brins.

Avantageusement, l'échangeur de chaleur comporte :
- un premier brin supplémentaire qui relie fluidiquement une zone d'intersection entre le brin avant et le brin supérieur à une zone d'intersection entre le brin arrière et le brin inférieur, et
- un deuxième brin supplémentaire qui relie fluidiquement une zone d'intersection entre le brin avant et le brin inférieur à une zone d'intersection entre le brin arrière et le brin supérieur,
le premier brin supplémentaire et le deuxième brin supplémentaire sont fluidiquement reliés l'un à l'autre au niveau de leurs zones centrales et entre chaque extrémité d'un brin supplémentaire et la zone centrale dudit brin supplémentaire, ledit brin supplémentaire est fluidiquement relié au brin complémentaire qu'il croise.

Avantageusement, l'échangeur de chaleur comporte :
- un premier brin additionnel qui relie fluidiquement la zone centrale du brin avant à la zone centrale du brin arrière, et
- un deuxième brin additionnel qui relie fluidiquement la zone centrale du brin inférieur à la zone centrale du brin supérieur, et
le premier brin additionnel et le deuxième brin additionnel sont fluidiquement reliés l'un à l'autre au niveau de leurs zones centrales et les zones centrales des brins additionnels sont fluidiquement reliés aux zones centrales des brins supplémentaires.

Avantageusement, l'angle entre deux brins qui se croisent est supérieur ou égal à 45°.

Avantageusement, chaque capot intérieur comporte une âme et sur chaque face de l'âme, une peau solidaire de ladite face de l'âme, pour chaque brin, une face de l'âme présente un canal dans lequel le brin est fixé entre le fond du canal et la peau solidaire de ladite face.

L'invention propose également un aéronef comportant un moteur avec un noyau et une nacelle selon l'une des variantes précédentes, où le noyau est logé à l'intérieur de la structure intérieure fixe qui constitue une partie interne d'une veine secondaire du moteur.

Avantageusement, la face présentant le canal est orientée vers la veine secondaire.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique vue de devant d'un moteur de l'aéronef de la Fig. 1,
Fig. 3 est une vue de côté d'un échangeur de chaleur selon l'invention mis en place dans une structure intérieure fixe du moteur, et
Fig. 4 est une vue en coupe de la structure intérieure fixe du moteur.

### EXPOSÉ DÉTAILLÉ DE MODES DE RÉALISATION

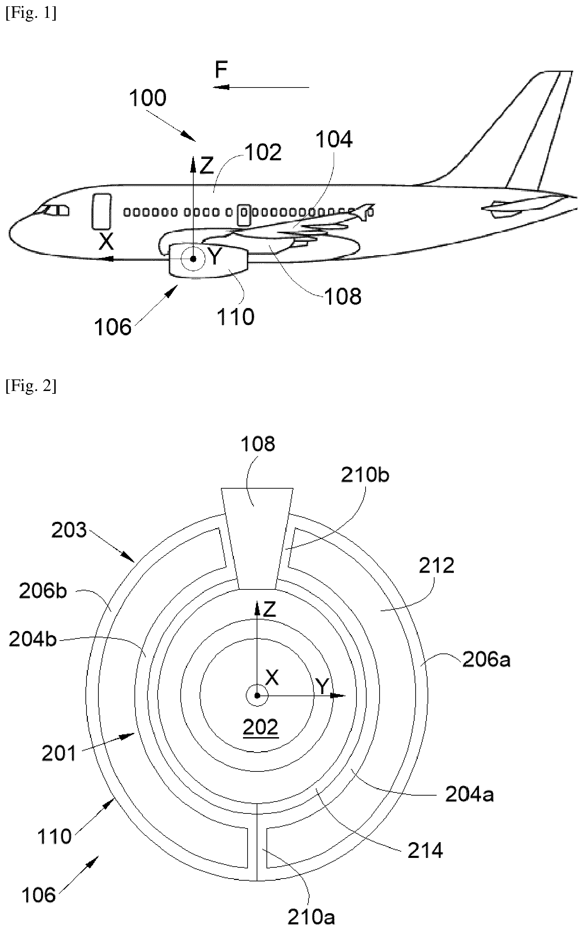

Dans la description qui suit, les termes relatifs à une position sont pris en référence à un aéronef en position d'avancement, c'est-à-dire comme il est représenté sur la Fig. 1 où la flèche F représente le sens d'avancement de l'aéronef lorsqu'il vole.

La Fig. 1 montre un aéronef 100 qui comporte un fuselage 102 et une aile 104 de chaque côté du fuselage 102. Sous chaque aile 104, l'aéronef 100 présente un moteur 106 attaché à l'aile 104 par un mât 108.

Le moteur 106 comporte un noyau et une nacelle 110 qui est autour du noyau.

Dans la description qui suit et par convention, on appelle X l'axe longitudinal du moteur 106 orienté positivement dans le sens d'avancement de l'aéronef 100, on appelle Y la direction transversale qui est horizontale lorsque l'aéronef est au sol et Z la direction verticale ou hauteur verticale lorsque l'aéronef est au sol, ces trois directions X, Y et Z étant orthogonales entre elles.

La Fig. 2 montre schématiquement le moteur 106 qui comporte le noyau 202 qui est logé dans la nacelle 110 qui comporte une structure intérieure fixe 201 et une structure extérieure fixe 203 qui sont fixées au mât 108.

Dans le mode de réalisation de l'invention présenté ici, la structure intérieure fixe 201 présente deux capots intérieurs 204a-b et la structure extérieure fixe 203 présente deux capots extérieurs 206a-b.

Chaque capot 204a-b, 206a-b prend globalement la forme d'un demi-cylindre et la nacelle 110 présente, de part et d'autre d'un plan milieu sensiblement vertical et passant par l'axe central du noyau 202, un capot intérieur 204a-b et un capot extérieur 206a-b associé. Ainsi, les capots intérieurs 204a-b sont agencés autour du noyau 202 et les capots extérieurs 206a-b sont agencés autour des capots intérieurs 204a-b.

Dans le mode de réalisation de l'invention présenté à la Fig. 2, le capot intérieur 204a-b et le capot extérieur 206a-b qui sont d'un même côté sont fixés l'un à l'autre par des structures radiales inférieures 210a et des structures radiales supérieures 210b. Bien sûr, il est possible que les capots 204a-b et 206a-b restent libres les uns par rapport aux autres.

Les deux capots intérieurs 204a-b forment globalement un cylindre qui entoure le noyau 202 et constitue la partie interne d'une veine secondaire 212 du moteur 106 dans laquelle circule un flux d'air frais provenant de l'avant de la nacelle 110 et les deux capots extérieurs 206a-b forment globalement un cylindre qui entoure les capots intérieurs 204a-b et constitue la partie externe de la veine secondaire 212.

Dans le mode de réalisation de l'invention présenté à la Fig. 2, la structure intérieure fixe 201 comporte une couche isolante 214, appelée protection thermique, constituée d'un matériau thermiquement isolant qui est fixé à l'intérieur des capots intérieurs 204a-b, c'est-à-dire entre le noyau 202 et lesdits capots intérieurs 204a-b.

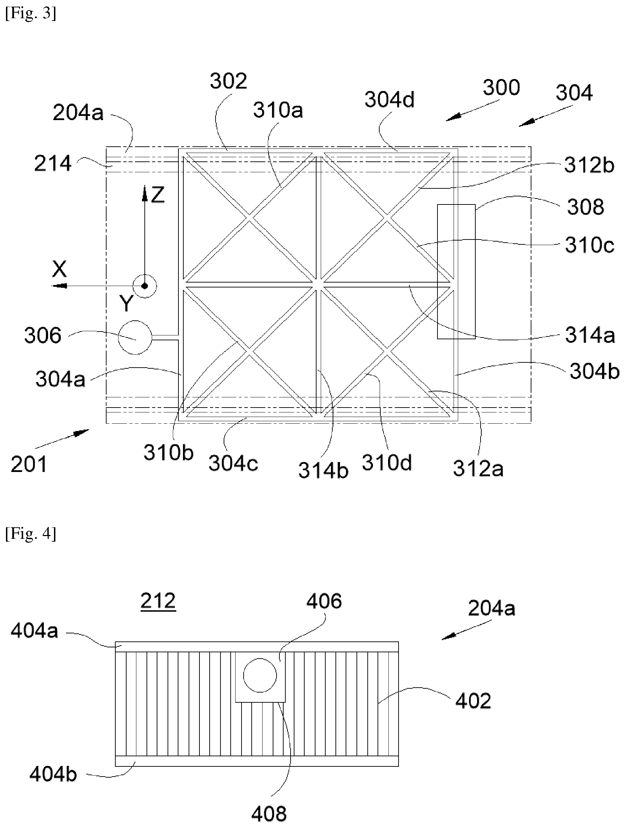

La Fig. 3 montre une vue de côté d'une moitié de la structure intérieure fixe 201 avec le capot intérieur 204a et la couche isolante 214 vus en traits fantôme.

La nacelle 110 comporte, pour chaque capot intérieur 204a, un échangeur de chaleur 300 dans lequel circule un fluide caloporteur et qui est solidaire dudit capot intérieur 204a. L'échangeur de chaleur 300 permet de capter, de transporter et de distribuer la chaleur de la partie arrière chaude du capot intérieur 204a vers la partie avant du capot intérieur 204a. L'échangeur de chaleur 300 comporte un tube 302 qui forme une boucle 304 qui présente un brin avant 304a, un brin arrière 304b, un brin inférieur 304c et un brin supérieur 304d.

Le brin avant 304a est agencé au niveau d'une partie avant du capot intérieur 204a, le brin arrière 304b est agencé au niveau d'une partie arrière du capot intérieur 204a et est donc derrière le brin avant 304a. Le brin supérieur 304d est agencé au niveau d'une partie haute du capot intérieur 204a, le brin inférieur 304c est agencé au niveau d'une partie basse du capot intérieur 204a et est donc en-dessous du brin supérieur 304d.

Le brin inférieur 304c et le brin supérieur 304d sont globalement parallèles à la direction longitudinale X et le brin avant 304a et le brin arrière 304b sont chacun dans un plan vertical perpendiculaire à la direction longitudinale X.

En vue de côté, la boucle 304 présente la forme d'un rectangle, mais le brin avant 304a et le brin arrière 304b sont arqués pour suivre la géométrie du capot intérieur 204a.

Le tube 302 est rempli d'un fluide caloporteur diphasique gaz-liquide. Dans le cas d'une boucle fluide à pompage mécanique ou d'une boucle fluide hybride à pompage capillaire et mécanique, l'échangeur de chaleur 300 comporte une pompe 306, par exemple mécanique, implantée sur un des brins 304a-d de la boucle 304, ici le brin avant 304a, pour entraîner le fluide caloporteur diphasique en mouvement. Dans le cas de l'utilisation de boucles fluides diphasiques à pompage capillaire (constituées par un évaporateur, un réservoir et un réseau de tubes condenseurs) ou de l'utilisation de caloducs fonctionnant par pompage capillaire, au niveau des brins 304a-d de la boucle 304, la pompe 306 est optionnelle.

L'échangeur de chaleur 300 comporte une zone évaporateur 308 implantée au niveau du brin arrière 304b et qui assure l'évacuation des calories du fluide caloporteur diphasique vers l'air extérieur, en particulier vers l'air circulant dans la veine secondaire 212, ainsi que le transport d'une certaine partie de la chaleur emmagasinée dans le capot intérieur 204a vers le brin avant 304a situé dans une zone ayant un environnement thermique interne plus froid, le moteur 106 étant plus chaud à l'arrière. La partie avant du capot intérieur 204a est la partie froide et la partie arrière du capot intérieur 204a est la partie chaude.

Dans le cas d'une boucle diphasique à pompage mécanique ou à pompage hybride mécanique et capillaire, sous l'action de la pompe 306, le fluide caloporteur en phase liquide se met en mouvement au niveau du brin avant 304a, il se charge de calories au niveau du brin arrière 304b et passe en phase gazeuse au niveau de l'évaporateur 308, puis circule dans la boucle 304 pour rejoindre le brin avant 304a où les calories sont évacuées pour refroidir le fluide caloporteur qui repasse en phase liquide.

Pour compenser les effets des mouvements de l'aéronef 100 dans le cas d'un pompage capillaire avec boucle fluide ou caloduc, et éviter que la phase liquide du fluide caloporteur circule moins bien et qu'elle parvienne difficilement à l'évaporateur 308, l'échangeur de chaleur 300 comporte :
- un premier brin complémentaire 310a qui relie fluidiquement une zone centrale du brin avant 304a à une zone centrale du brin supérieur 304d, par l'intermédiaire d'un nœud capillaire dans le cas d'un pompage capillaire,
- un deuxième brin complémentaire 310b qui relie fluidiquement une zone centrale du brin avant 304a à une zone centrale du brin inférieur 304c, par l'intermédiaire d'un nœud capillaire dans le cas d'un pompage capillaire,
- un troisième brin complémentaire 310c qui relie fluidiquement une zone centrale du brin arrière 304b à une zone centrale du brin supérieur 304d, par l'intermédiaire d'un nœud capillaire dans le cas d'un pompage capillaire, et
- un quatrième brin complémentaire 310d qui relie fluidiquement une zone centrale du brin arrière 304b à une zone centrale du brin inférieur 304c, par l'intermédiaire d'un nœud capillaire dans le cas d'un pompage capillaire.

Chaque brin complémentaire 310a-d est un tube dans lequel le fluide caloporteur circule et chacun forme ainsi une canalisation de déviation qui permet au fluide caloporteur de dévier pour rejoindre l'évaporateur 308 selon la position de l'aéronef 100.

Les brins complémentaires 310a-d forment, vu de côté, un losange qui assure un passage pour le fluide caloporteur en particulier, lorsque le nez de l'aéronef 100 se baisse ou se relève. Chaque brin complémentaire 310a-d est arqué pour suivre la géométrie du capot intérieur 204a.

Pour compenser encore mieux les effets des mouvements de l'aéronef 100, l'échangeur de chaleur 300 comporte :
- un premier brin supplémentaire 312a qui relie fluidiquement une zone d'intersection entre le brin avant 304a et le brin supérieur 304d à une zone d'intersection entre le brin arrière 304b et le brin inférieur 304c, par l'intermédiaire d'un nœud capillaire dans le cas d'un pompage capillaire, et
- un deuxième brin supplémentaire 312b qui relie fluidiquement une zone d'intersection entre le brin avant 304a et le brin inférieur 304c à une zone d'intersection entre le brin arrière 304b et le brin supérieur 304d, par l'intermédiaire d'un nœud capillaire dans le cas d'un pompage capillaire.

Le premier brin supplémentaire 312a et le deuxième brin supplémentaire 312b sont fluidiquement reliés l'un à l'autre au niveau de leurs zones centrales, par l'intermédiaire d'un nœud capillaire dans le cas d'un pompage capillaire.

Entre chaque extrémité d'un brin supplémentaire 312a-b et la zone centrale dudit brin supplémentaire 312a-b, ledit brin supplémentaire 312a-b est fluidiquement relié au brin complémentaire 310a-d qu'il croise, par l'intermédiaire d'un nœud capillaire dans le cas d'un pompage capillaire.

Chaque brin supplémentaire 312a-b est un tube dans lequel le fluide caloporteur circule et chacun forme ainsi une canalisation de déviation qui permet au fluide caloporteur de dévier pour rejoindre l'évaporateur 308 selon la position de l'aéronef 100.

Les brins supplémentaires 312a-b forment, vu de côté, un X et chaque brin supplémentaire 312a-b est arqué pour suivre la géométrie du capot intérieur 204a.

Pour compenser encore mieux les effets des mouvements de l'aéronef 100, l'échangeur de chaleur 300 comporte :
- un premier brin additionnel 314a qui relie fluidiquement la zone centrale du brin avant 304a à la zone centrale du brin arrière 304b, par l'intermédiaire d'un nœud capillaire dans le cas d'un pompage capillaire, et
- un deuxième brin additionnel 314b qui relie fluidiquement la zone centrale du brin inférieur 304c à la zone centrale du brin supérieur 304d, par l'intermédiaire d'un nœud capillaire dans le cas d'un pompage capillaire.

Le premier brin additionnel 314a et le deuxième brin additionnel 314b sont fluidiquement reliés l'un à l'autre au niveau de leurs zones centrales et les zones centrales des brins additionnels 314a-b sont fluidiquement reliées aux zones centrales des brins supplémentaires 312a-b, par l'intermédiaire d'un nœud capillaire dans le cas d'un pompage capillaire.

Chaque brin additionnel 314a-b est un tube dans lequel le fluide caloporteur circule et chacun forme ainsi une canalisation de déviation qui permet au fluide caloporteur de dévier pour rejoindre l'évaporateur 308 selon la position de l'aéronef 100.

Les brins additionnels 314a-b forment, vu de côté, une croix et chaque brin additionnel 314a-b est arqué pour suivre la géométrie du capot intérieur 204a.

L'échangeur de chaleur 300 assure également une meilleure homogénéisation de la température par le transport de la chaleur dans toutes les directions, la réduction des gradients de température et en évitant les points chauds dans le capot intérieur 204a.

Pour garantir un angle suffisant entre les brins et ainsi une déviation suffisante du fluide caloporteur en cas de besoin, l'angle entre deux brins 310a-d, 312a-b, 314a-b qui se croisent est supérieur ou égal à 45°. Dans le mode de réalisation de l'invention présenté à la Fig. 3, les angles entre deux brins sont égaux à 45° ou à 90°.

La Fig. 4 montre une vue en coupe de la structure intérieure fixe 201 et plus particulièrement du capot intérieur 204a qui prend la forme d'une structure sandwich avec une âme 402 en particulier en nid d'abeille, et sur chaque face de l'âme 402, une peau 404a-b solidaire de ladite face de l'âme 402.

Pour chaque brin 406, une face de l'âme 402 est usinée de manière à réaliser un canal 408 dans lequel le brin 406 est fixé, par exemple par collage, entre le fond du canal 408 et la peau 404a solidaire de ladite face.

Dans le mode de réalisation de l'invention présenté à la Fig. 4, la section externe du brin 406 est carrée avec un passage à section interne circulaire pour le passage du fluide caloporteur. Le brin 406 est fabriqué par exemple par extrusion.

Le matériau du brin 406 peut être par exemple en alliage d'aluminium, en alliage de cuivre, en acier inoxydable ou en alliage de nickel.

La phase liquide et la phase gazeuse du fluide caloporteur diphasique sont présentes à l'intérieur des brins, à des taux qui dépendent de la température. Le choix du fluide caloporteur diphasique se fait en fonction de sa compatibilité avec le matériau du brin 406 et de ses propriétés physico-chimiques en fonction de la plage de température de fonctionnement de l'échangeur : le fluide caloporteur diphasique peut être par exemple du fréon (typiquement jusqu'à 120°C) associé à un brin 406 en alliage d'aluminium, du méthanol ou de l'eau (typiquement jusqu'à 200°C) associé à un brin 406 en alliage de cuivre ou du soufre (typiquement jusqu'à 650°C) associé à un brin 406 en acier inoxydable ou du potassium (typiquement jusqu'à 850°C) associé à un brin 406 en alliage de nickel.

Préférentiellement, la face présentant le canal 408 est orientée vers la veine secondaire 212 et la face non usinée est orientée vers le noyau 202, mais une orientation inverse est également possible.

## Revendications

1. Nacelle (110) pour un moteur (106) d'aéronef (100), la nacelle (110) comportant une structure intérieure fixe (201) qui présente deux capots intérieurs (204a-b) et pour chaque capot intérieur (204a-b), un échangeur de chaleur (300) dans lequel circule un fluide caloporteur diphasique et solidaire dudit capot intérieur (204a-b), où l'échangeur de chaleur (300) comporte :
- un tube (302) qui forme une boucle (304) avec un brin avant (304a), un brin arrière (304b), un brin inférieur (304c) et un brin supérieur (304d), et
- une zone évaporateur (308) implantée au niveau du brin arrière (304b), la nacelle (110) étant telle que l'échangeur de chaleur (300) comporte :
- un premier brin complémentaire (310a) qui relie fluidiquement une zone centrale du brin avant (304a) à une zone centrale du brin supérieur (304d),
- un deuxième brin complémentaire (310b) qui relie fluidiquement une zone centrale du brin avant (304a) à une zone centrale du brin inférieur (304c),
- un troisième brin complémentaire (310c) qui relie fluidiquement une zone centrale du brin arrière (304b) à une zone centrale du brin supérieur (304d), et
- un quatrième brin complémentaire (310d) qui relie fluidiquement une zone centrale du brin arrière (304b) à une zone centrale du brin inférieur (304c).

2. Nacelle (110) selon la revendication 1, telle que l'échangeur de chaleur (300) comporte :
- un premier brin supplémentaire (312a) qui relie fluidiquement une zone d'intersection entre le brin avant (304a) et le brin supérieur (304d) à une zone d'intersection entre le brin arrière (304b) et le brin inférieur (304c), et
- un deuxième brin supplémentaire (312b) qui relie fluidiquement une zone d'intersection entre le brin avant (304a) et le brin inférieur (304c) à une zone d'intersection entre le brin arrière (304b) et le brin supérieur (304d),
telle que le premier brin supplémentaire (312a) et le deuxième brin supplémentaire (312b) sont fluidiquement reliés l'un à l'autre au niveau de leurs zones centrales et telle qu'entre chaque extrémité d'un brin supplémentaire (312a-b) et la zone centrale dudit brin supplémentaire (312a-b), ledit brin supplémentaire (312a-b) est fluidiquement relié au brin complémentaire (310a-d) qu'il croise.

3. Nacelle (110) selon la revendication 2, telle que l'échangeur de chaleur (300) comporte :
- un premier brin additionnel (314a) qui relie fluidiquement la zone centrale du brin avant (304a) à la zone centrale du brin arrière (304b), et
- un deuxième brin additionnel (314b) qui relie fluidiquement la zone centrale du brin inférieur (304c) à la zone centrale du brin supérieur (304d), et
telle que le premier brin additionnel (314a) et le deuxième brin additionnel (314b) sont fluidiquement reliés l'un à l'autre au niveau de leurs zones centrales et les zones centrales des brins additionnels (314a-b) sont fluidiquement reliées aux zones centrales des brins supplémentaires (312a-b).

4. Nacelle (110) selon l'une des revendications 1 à 3, telle que l'angle entre deux brins (310a-d, 312a-b, 314a-b) qui se croisent est supérieur ou égal à 45°.

5. Nacelle (110) selon l'une des revendications 1 à 4, telle que chaque capot intérieur (204a-b) comporte une âme (402) et sur chaque face de l'âme (402), une peau (404a-b) solidaire de ladite face de l'âme (402), telle que pour chaque brin (406, 310a-d, 312a-b, 314a-b), une face de l'âme (402) présente un canal (408) dans lequel le brin (406, 310a-d, 312a-b, 314a-b) est fixé entre le fond du canal (408) et la peau (404a) solidaire de ladite face.

6. Aéronef (100) comportant un moteur (106) avec un noyau (202) et une nacelle (110) selon l'une des revendications 1 à 5, où le noyau (202) est logé à l'intérieur de la structure intérieure fixe (201) qui constitue une partie interne d'une veine secondaire (212) du moteur (106).

7. Aéronef (100) selon la revendication 6 lorsqu'elle dépend de la revendication 5, tel que la face présentant le canal (408) est orientée vers la veine secondaire (212).

## Patentansprüche

1. Gondel (110) für ein Triebwerk (106) eines Luftfahrzeugs (100), wobei die Gondel (110) eine feststehende innere Struktur (201) umfasst, die zwei innere Verkleidungen (204a-b) aufweist und für jede innere Verkleidung (204a-b) einen Wärmetauscher (300), in dem ein Zweiphasen-Wärmeträgerfluid zirkuliert und der fest mit der inneren Verkleidung (204a-b) verbunden ist, wobei der Wärmetauscher (300) umfasst:
- ein Rohr (302), das einen Kreislauf (304) mit einem vorderen Strang (304a), einem hinteren Strang (304b), einem unteren Strang (304c) und einem oberen Strang (304d) bildet, und
- einen Verdampferbereich (308), der an dem hinteren Strang (304b) angeordnet ist,
wobei die Gondel (110) dergestalt ist, dass der Wärmetauscher (300) umfasst:
- einen ersten ergänzenden Strang (310a), der einen zentralen Bereich des vorderen Strangs (304a) mit einem zentralen Bereich des oberen Strangs (304d) fluidisch verbindet,
- einen zweiten ergänzenden Strang (310b), der einen zentralen Bereich des vorderen Strangs (304a) mit einem zentralen Bereich des unteren Strangs (304c) fluidisch verbindet,
- einen dritten ergänzenden Strang (310c), der einen zentralen Bereich des hinteren Strangs (304b) mit einem zentralen Bereich des oberen Strangs (304d) fluidisch verbindet, und
- einen vierten ergänzenden Strang (310d), der einen zentralen Bereich des hinteren Strangs (304b) mit einem zentralen Bereich des unteren Strangs (304c) fluidisch verbindet.

2. Gondel (110) nach Anspruch 1, wobei der Wärmetauscher (300) umfasst:
- einen ersten zusätzlichen Strang (312a), der einen Kreuzungsbereich zwischen dem vorderen Strang (304a) und dem oberen Strang (304d) mit einem Kreuzungsbereich zwischen dem hinteren Strang (304b) und dem unteren Strang (304c) fluidisch verbindet, und
- einen zweiten zusätzlichen Strang (312b), der einen Kreuzungsbereich zwischen dem vorderen Strang (304a) und dem unteren Strang (304c) mit einem Kreuzungsbereich zwischen dem hinteren Strang (304b) und dem oberen Strang (304d) fluidisch verbindet,
wobei der erste zusätzliche Strang (312a) und der zweite zusätzliche Strang (312b) an ihren zentralen Bereichen fluidisch miteinander verbunden sind und wobei zwischen jedem Ende eines zusätzlichen Strangs (312a-b) und dem zentralen Bereich des zusätzlichen Strangs (312a-b) der zusätzliche Strang (312a-b) fluidisch mit dem ergänzenden Strang (310a-d) verbunden ist, den er kreuzt.

3. Gondel (110) nach Anspruch 2, wobei der Wärmetauscher (300) umfasst:
- einen ersten additionalen Strang (314a), der den zentralen Bereich des vorderen Strangs (304a) mit dem zentralen Bereich des hinteren Strangs (304b) fluidisch verbindet, und
- einen zweiten additionalen Strang (314b), der den zentralen Bereich des unteren Strangs (304c) mit dem zentralen Bereich des oberen Strangs (304d) fluidisch verbindet, und
wobei der erste additionale Strang (314a) und der zweite additionale Strang (314b) an ihren zentralen Bereichen fluidisch miteinander verbunden sind und die zentralen Bereiche der additionalen Stränge (314a-b) mit den zentralen Bereichen der zusätzlichen Stränge (312a-b) fluidisch verbunden sind.

4. Gondel (110) nach einem der Ansprüche 1 bis 3, wobei der Winkel zwischen zwei Strängen (310a-d, 312a-b, 314ab), die sich kreuzen, größer als oder gleich 45° ist.

5. Gondel (110) nach einem der Ansprüche 1 bis 4, wobei jede innere Verkleidung (204a-b) eine Seele (402) und auf jeder Seite der Seele (402) eine Haut (404a-b), die fest mit der Seite der Seele (402) verbunden ist, umfasst, wobei bei jedem Strang (406, 310a-d, 312a-b, 314a-b) eine Seite der Seele (402) einen Kanal (408) aufweist, in dem der Strang (406, 310a-d, 312a-b, 314a-b) zwischen dem Boden des Kanals (408) und der Haut (404a), die fest mit der Seele verbunden ist, befestigt ist.

6. Luftfahrzeug (100), umfassend ein Triebwerk (106) mit einem Kern (202) und eine Gondel (110) nach einem der Ansprüche 1 bis 5, wobei der Kern (202) im Inneren der feststehenden inneren Struktur (201 aufgenommen ist, die einen inneren Teil eines Nebenstromkanals (212) des Triebwerks (106) bildet.

7. Luftfahrzeug (100) nach Anspruch 6, wenn abhängig von Anspruch 5, wobei die den Kanal (408) aufweisende Seite zu dem Nebenstromkanal (212) hin ausgerichtet ist.

## Claims

1. Nacelle (110) for an engine (106) of an aircraft (100), the nacelle (110) comprising an inner fixed structure (201) which has two inner cowls (204a-b) and, for each inner cowl (204a-b), a heat exchanger (300) in which a two-phase heat transfer fluid circulates and which is secured to said inner cowl (204a-b), wherein the heat exchanger (300) comprises:
- a tube (302) which forms a loop (304) with a front strand (304a), a rear strand (304b), a lower strand (304c) and an upper strand (304d), and
- an evaporator zone (308) located on the rear strand (304b),
the nacelle (110) being such that the heat exchanger (300) comprises:
- a first complementary strand (310a) which fluidically connects a central zone of the front strand (304a) to a central zone of the upper strand (304d),
- a second complementary strand (310b) which fluidically connects a central zone of the front strand (304a) to a central zone of the lower strand (304c),
- a third complementary strand (310c) which fluidically connects a central zone of the rear strand (304b) to a central zone of the upper strand (304d), and
- a fourth complementary strand (310d) which fluidically connects a central zone of the rear strand (304b) to a central zone of the lower strand (304c).

2. Nacelle (110) according to Claim 1, such that the heat exchanger (300) comprises:
- a first supplementary strand (312a) which fluidically connects a zone of intersection between the front strand (304a) and the upper strand (304d) to a zone of intersection between the rear strand (304b) and the lower strand (304c), and
- a second supplementary strand (312b) which fluidically connects a zone of intersection between the front strand (304a) and the lower strand (304c) to a zone of intersection between the rear strand (304b) and the upper strand (304d),
such that the first supplementary strand (312a) and the second supplementary strand (312b) are fluidically connected to one another at their central zones, and such that between each end of a supplementary strand (312a-b) and the central zone of said supplementary strand (312a-b), said supplementary strand (312a-b) is fluidically connected to the complementary strand (310a-d) which it intersects.

3. Nacelle (110) according to Claim 2, such that the heat exchanger (300) comprises:
- a first additional strand (314a) which fluidically connects the central zone of the front strand (304a) to the central zone of the rear strand (304b), and
- a second additional strand (314b) which fluidically connects the central zone of the lower strand (304c) to the central zone of the upper strand (304d), and
such that the first additional strand (314a) and the second additional strand (314b) are fluidically connected to one another at their central zones and the central zones of the additional strands (314a-b) are fluidically connected to the central zones of the supplementary strands (312a-b).

4. Nacelle (110) according to one of Claims 1 to 3, such that the angle between two strands (310a-d, 312a-b, 314a-b) which intersect is greater than or equal to 45°.

5. Nacelle (110) according to one of Claims 1 to 4, such that each inner cowl (204a-b) comprises a core (402) and, on each face of the core (402), a skin (404a-b) which is secured to said face of the core (402), such that a face of the core (402) has, for each strand (406, 310a-d, 312a-b, 314a-b), a channel (408) in which the strand (406, 310a-d, 312a-b, 314a-b) is fastened between the bottom of the channel (408) and the skin (404a) which is secured to said face.

6. Aircraft (100) comprising an engine (106) with a hub (202) and a nacelle (110) according to one of Claims 1 to 5, wherein the hub (202) is housed inside the inner fixed structure (201) which constitutes an internal part of a secondary duct (212) of the engine (106).

7. Aircraft (100) according to Claim 6 when it is dependent on Claim 5, such that the face having the channel (408) is oriented towards the secondary duct (212).
